# EUROPEAN PATENT APPLICATION

(11) **EP 1 286 346 A1**
(43) Date of publication of application: **26.02.2003**
(21) Application number: 01919959.5
(22) Date of filing: 16.04.2001
(51) Int. Cl.: G11B 11/105

(54) **MAGNETO-OPTICAL DISK DEVICE CAPABLE OF PERFORMING MAGNETIC DOMAIN EXPANSION REPRODUCTION BY DC MAGNETIC FIELD AND REPRODUCING METHOD**

(30) Priority: 19.04.2000 JP 2000118585; 11.09.2000 JP 2000274759
(71) Applicant: Sanyo Electric Co., Ltd., Moriguchi-shi, Osaka 570-0083 (JP)
(72) Inventor: NOGUCHI, Hitoshi, Moriguchi-shi, Osaka 570-8677 (JP); YAMAGUCHI, Atsushi, Moriguchi-shi, Osaka 570-8677 (JP); ISHIDA, Hiroki, Moriguchi-shi, Osaka 570-8677 (JP); TAKAGI, Naoyuki, Moriguchi-shi, Osaka 570-8677 (JP); MITANI, Kenichiro, Moriguchi-shi, Osaka 570-8677 (JP)
(74) Representative: Glawe. Delfs. Moll
(86) International application number: JP0103248
(87) International publication number: WO01080230

(57) **Abstract**

A magneto-optical disk apparatus (100) includes an optical pickup (101) and a magnetic head (113). The optical pickup (101) irradiates a magneto-optical recording medium (10) with a laser beam of such intensity that a part of a reproducing layer of the magneto-optical recording medium (10) is heated to a temperature over the compensation temperature. The magnetic head (113) applies to the magneto-optical recording medium (10) a DC magnetic field having intensity weaker than the intensity at which magnetization of a transition-metal-richarea in a part of the reproducing layer heated to a temperature over the compensation temperature is inverted. The optical pickup (101) detects a magneto-optical signal varying in intensity between two levels. As a result, a signal can be reproduced correctly from the magneto-optical recording medium (10) by a magnetic domain enlargement system.

## Description

### Technical Field

The present invention relates to a magneto-optical disk apparatus reproducing a signal from a magneto-optical recording medium by a magnetic domain enlargement and reproduction system using a laser beam and a direct current (DC) magnetic field, and to a method of reproducing the same.

### Background Art

A magneto-optical recording medium has drawn attention as a recording medium which is rewritable, has a large storage capacity and is highly reliable, and has been put into practice as a computer memory or the like. Furthermore, in recent years, a magneto-optical recording medium having a storage capacity of 6.0 Gbytes is standardized as an AS-MO (Advanced Storage Magneto Optical disk) and is about to come into practical use.

A magneto-optical recording medium according to this AS-MO standard has a track structure with lands and grooves alternately arranged in a radial direction and attains a high density by recording signals in both lands and grooves.

In order to increase a recording density of signals in a magneto-optical recording medium, a domain length of a magnetic domain formed in a recording layer of the magneto-optical recording medium may be shortened. Since a signal is recorded in the magneto-optical recording medium by irradiating the magneto-optical recording medium with a laser beam to raise a temperature of the recording layer to Curie point while applying to the recording layer a magnetic field modulated by a record signal, it is possible to form a magnetic domain having a short domain length in the recording layer by shortening the time to apply the magnetic field modulated by the record signal.

It is, however, difficult to transfer each magnetic domain from the recording layer to a reproducing layer at high resolution in the magneto-optical recording medium having a short domain length formed in the recording layer, since reproduction of a signal from the magneto-optical recording medium is performed by transferring each magnetic domain formed in the recording layer to the reproducing layer and detecting the transferred magnetic domain by a laser beam. The reason is as follows.

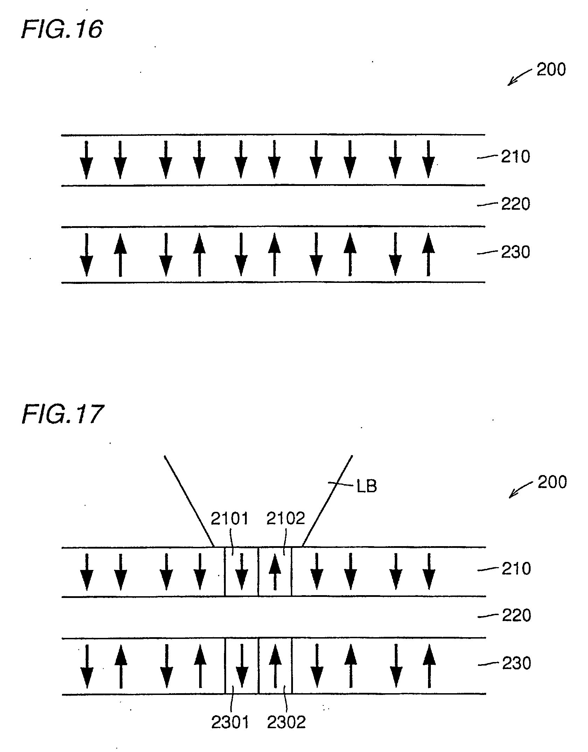

Referring to Fig. 16, a magneto-optical recording medium 200 includes a reproducing layer 210, a non-magnetic layer 220 and a recording layer 230. When a signal is reproduced from magneto-optical recording medium 200, magnetization of reproducing layer 210 is initialized in a certain direction and recording layer 230 has magnetic domains modulated by record signals. Then, as shown in Fig. 17, when magneto-optical recording medium 200 is irradiated with a laser beam LB from the side of reproducing layer 210, a magnetic domain in that area of recording layer 230 which is heated to a prescribed temperature or higher is transferred to reproducing layer 210 through non-magnetic layer 220 by magnetostatic coupling and that transferred magnetic domain is detected by laser beam LB. Here, if the domain length of the magnetic domain formed in recording layer 230 is shortened, an area in which two magnetic domains 2301, 2302 exist is heated to a prescribed temperature or higher and two magnetic domains 2101, 2102 different in magnetization direction are transferred to reproducing layer 210. As a result, magnetic domains 2101, 2102 transferred to reproducing layer 210 cannot be correctly detected by laser beam LB.

In order to solve this problem, each magnetic domain may be transferred from recording layer 230 to reproducing layer 210 individually. In other words, that area of recording layer 230 which is heated to a prescribed temperature or higher may be narrowed by shifting a temperature range in which the saturation magnetization of recording layer 230 is maximized, to a higher temperature.

When a magnetic domain having a short magnetic domain length is individually transferred to reproducing layer 210 for signal reproduction, however, a reproduced signal intensity is reduced as a result of the short length of the magnetic domain. Accordingly, a magnetic domain enlargement and reproduction system is proposed as a reproduction system to transfer a magnetic domain having a short domain length from a recording layer to a reproducing layer at high resolution and obtaining a reproduced signal of high intensity. In this magnetic domain enlargement and reproduction system, a signal is reproduced by irradiating a magneto-optical recording medium with a laser beam and applying an alternating magnetic field to enlarge and transfer each magnetic domain in the recording layer to the reproducing layer. In other words, at the timing when a magnetic field having the same direction as magnetization of a magnetic domain to be transferred to the reproducing layer is applied, that magnetic domain is enlarged and transferred to the reproducing layer and detected by a laser beam. Then, at the timing when a magnetic field in a different direction from the magnetic field as enlarged and transferred to the reproducing layer is applied, the magnetic domain enlarged and transferred to the reproducing layer is extinguished. Enlargement and transfer to the reproducing layer as well as extinction of a magnetic domain are repeated so that each magnetic domain in the recording layer is reproduced by magnetic domain enlargement.

In a system in which a signal is reproduced by applying an alternating magnetic field to a magneto-optical recording medium for magnetic domain enlargement, however, an alternating magnetic field at a high frequency of about 25 MHz is applied to the magneto-optical recording medium, and therefore the system at the time of reproduction is inevitably complicated in order to enlarge and transfer each magnetic domain to the reproducing layer according to such an alternating magnetic field at a high frequency and extinguish the enlarged and transferred magnetic domain.

### Disclosure of the Invention

Therefore, an object of the present invention is to provide a magneto-optical disk apparatus capable of correctly reproducing a signal from a magneto-optical recording medium by magnetic domain enlargement.

Another object of the present invention is to provide a reproducing method allowing a signal to be correctly reproduced from a magneto-optical recording medium by magnetic domain enlargement.

In accordance with the present invention, a magneto-optical disk apparatus reproduces a signal from a magneto-optical recording medium including a reproducing layer which is rare-earth-metal-rich at room temperature and becomes transition-metal-rich at a compensation temperature or higher. The magneto-optical disk apparatus includes: an optical pickup irradiating the magneto-optical recording medium with a laser beam of such intensity that a part of the reproducing layer is heated to the compensation temperature or higher, and detecting reflected light therefrom; a magnetic head applying to the magneto-optical recording medium a DC magnetic field having a second magnetic field intensity weaker than a first magnetic field intensity at which magnetization in a transition-metal-rich area of the reproducing layer is inverted; and a signal processing circuit processing a magneto-optical signal detected by the optical pickup while the DC magnetic field is applied to the magneto-optical recording medium, and outputting a reproduced signal.

In the magneto-optical disk apparatus in accordance with the present invention, a magneto-optical signal is detected which is varying in intensity between two levels depending on the direction of magnetization of a magnetic domain recorded in the recording layer of the magneto-optical recording medium. Of the two levels, one level corresponds to the case where the magnetic domain in the recording layer is enlarged and transferred to the reproducing layer, and the other level corresponds to the case where the enlarged and transferred magnetic domain is extinguished.

Preferably, the magnetic head applies to the magneto-optical recording medium a DC magnetic field having the same direction as either one of magnetization in one direction and opposite direction of the magnetic domain formed in the recording layer of the magneto-optical recording medium.

Preferably, when Hc represents a coercive force of the transition-metal-rich area in a part of the reproducing layer, H_{L} represents a leakage magnetic field extending from the magnetic domain in the recording layer to the part of the reproducing layer, and H_{DC} represents the intensity of the DC magnetic field, the magnetic head applies to the magneto-optical recording medium a DC magnetic field having intensity that satisfies H_{DC}+H_{L}>H_{C}>H_{DC}-H_{L}.

Preferably, the optical pickup detects a magneto-optical signal at a first level when a magnetic domain having magnetization in the same direction as the DC magnetic field is transferred to the reproducing layer, and detects a magneto-optical signal at a second level different from the first level when a magnetic domain having magnetization in the direction opposite to the DC magnetic field is transferred to the reproducing layer.

Preferably, the magnetic head applies to the magneto-optical recording medium a DC magnetic field in the same direction as initialized magnetization of the reproducing layer.

Preferably, the optical pickup detects a magneto-optical signal at a first level when a magnetic domain having magnetization in the same direction as the initialized magnetization is transferred to the reproducing layer, and detects a magneto-optical signal at a second level higher than the first level when a magnetic domain having magnetization in the direction opposite to the initialized magnetization is transferred to the reproducing layer.

Preferably, the optical pickup detects a magneto-optical signal at a first level when a magnetic domain having magnetization in the same direction as the initialized magnetization, and detects a magneto-optical signal at a second level lower than the first level when a magnetic domain having magnetization in the direction opposite to the initialized magnetization is transferred to the reproducing layer.

Furthermore, in accordance with the present invention, there is provided a method of reproducing a signal from a magneto-optical recording medium including a reproducing layer which is rare-earth-metal-rich at room temperature and becomes transition-metal-rich at a compensation temperature or higher. The method includes: a first step of irradiating the magneto-optical recording medium with a laser beam of such intensity that a part of the reproducing layer is heated to the compensation temperature or higher; a second step of applying to the magneto-optical recording medium a DC magnetic field having a second magnetic field intensity weaker than a first magnetic field intensity at which magnetization of a transition-metal-rich area of the reproducing layer is inverted; and a third step of processing a magneto-optical signal detected by applying the DC magnetic field to the magneto-optical recording medium, and outputting a reproduced signal.

In the reproducing method in accordance with the present invention, a magneto-optical signal is detected which has intensity varied between two levels depending on the magnetization direction of the magnetic domain recorded in the recording layer of the magneto-optical recording medium. Of the two levels, a higher level corresponds to the case where a magnetic domain of the recording layer is enlarged and transferred to the reproducing layer, and a lower level corresponds to the case where the magnetic domain in the recording layer is transferred to the reproducing layer.

Preferably, in the second step, a DC magnetic field in the same direction as either one of magnetization in one direction and opposite direction of the magnetic domain formed in the recording layer of the magneto-optical recording medium, is applied to the magneto-optical recording medium.

Preferably, when Hc represents a coercive force of the transition-metal-rich area in a part of the reproducing layer, H_{L} represents a leakage magnetic field extending from the magnetic domain in the recording layer to the part of the reproducing layer, and H_{DC} represents the intensity of the DC magnetic field, a DC magnetic field having intensity that satisfies H_{DC}+H_{L}>H_{C}>H_{DC}-H_{L} is applied to the magneto-optical recording medium, in the second step.

Preferably, in the third step, a magneto-optical signal at a first level is detected when a magnetic domain having magnetization in the same direction as the DC magnetic field is transferred to the reproducing layer, and a magneto-optical signal at a second level different from the first level is detected when a magnetic domain having magnetization in the direction opposite to the DC magnetic field is transferred to the reproducing layer.

Preferably, in the second step, a DC magnetic field in the same direction as initialized magnetization of the reproducing layer is applied to the magneto-optical recording medium.

Preferably, in the third step, a magneto-optical signal at a first level is detected when a magnetic domain having magnetization in the same direction as the initialized magnetization is transferred to the reproducing layer, and a magneto-optical signal at a second level higher than the first level is detected when a magnetic domain having magnetization in the direction opposite to the initialized magnetization is transferred to the reproducing layer.

Preferably, in the third step, a magneto-optical signal at a first level is detected when a magnetic domain having magnetization in the same direction as that of the initialized magnetization, and a magneto-optical signal at a second level lower than the first level is detected when a magnetic domain having magnetization in the direction opposite to the initialized magnetization is transferred to the reproducing layer.

### Brief Description of Drawings

Fig. 1 is a cross-section representing a structure of a magneto-optical recording medium.
Fig. 2 is a schematic cross sectional view showing the magnetization state of a reproducing layer and a recording layer of the magneto-optical recording medium shown in Fig. 1.
Fig. 3A is a graph showing a magnetic characteristic of a magnetic film for use in the reproducing layer of the magneto-optical recording medium shown in Fig. 1.
Fig. 3B is a graph showing a magnetic characteristic of a magnetic film for use in the recording layer of the magneto-optical recording medium shown in Fig. 1.
Fig. 4 is a diagram showing the relation between the intensity distribution of laser beam with which the magneto-optical recording medium is irradiated and the magnetization state of the reproducing and recording layers of the magneto-optical recording medium.
Figs. 5A to 5D show the magnetization states of the reproducing layer when DC magnetic fields different in intensity and direction are applied.
Figs. 6A to 6D respectively show signal levels corresponding to the magnetization states shown in Figs. 5A to 5D, and Fig. 6E is a diagram for comparing the signal levels respectively shown in Figs. 6A to 6D.
Figs. 7A to 7C are diagrams illustrating a principle of reproducing a signal in accordance with the present invention.
Figs. 8A to 8C are additional diagrams illustrating a reproduction principle of the signal in accordance with the present invention.
Fig. 9 is a diagram illustrating the cases where magnetization of a transition-metal-rich area in an area heated to a compensation temperature or higher, of the reproducing layer, is inverted and not inverted.
Fig. 10 is a schematic block diagram of a magneto-optical disk apparatus in accordance with the present invention.
Fig. 11 is a flow chart illustrating a reproduction method in accordance with the present invention.
Fig. 12 is a waveform diagram of a signal reproduced by the method in accordance with the present invention.
Fig. 13 is another waveform diagram of a signal reproduced by the method in accordance with the present invention.
Fig. 14 is a graph showing a magnetic domain dependency of reproduced signal intensity.
Figs. 15A to 15C are waveform diagrams of the reproduced signal when a compensation temperature of the reproducing layer of the magneto-optical recording medium is varied.
Fig. 16 is a schematic cross sectional view showing the magnetization state of reproducing and recording layers before reproduction, of a conventional magneto-optical recording medium.
Fig. 17 is a schematic cross sectional view showing the magnetization state of reproducing and recording layers at the time of reproduction, of the conventional magneto-optical recording medium.

### Best Modes for Carrying Out the Invention

Embodiments of the present invention will be described in detail with reference to the figures. It is noted that in the figures the same or corresponding components will be denoted with the same reference characters and the description thereof will not be repeated.

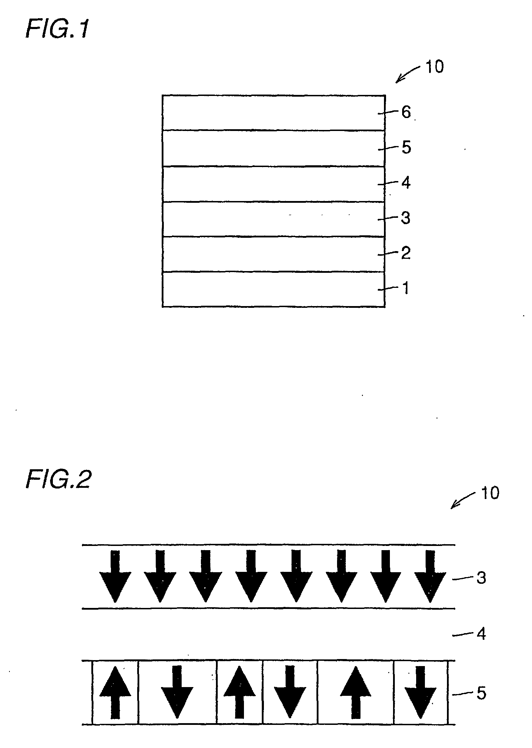

Referring to Fig. 1, a magneto-optical recording medium onto/from which magneto-optical disk apparatus of the present invention records and/or reproduces, will be described. Magneto-optical recording medium 10 includes a transparent substrate 1, an underlying layer 2, a reproducing layer 3, a non-magnetic layer 4, a recording layer 5, and a protective film 6. Transparent substrate 1 is formed of glass, polycarbonate resin or the like. Underlying layer 2 is formed of silicon nitride (SiN). Reproducing layer 3 is formed of GdFeCo having a compensation temperature in a temperature range of 100 - 160 °C. Non-magnetic layer 4 is formed of SiN. Recording layer 5 is formed of TbFeCo. Protective film 6 is formed of SiN.

Furthermore, underlying layer 2 has a thickness of 40 - 80 nm. Reproducing layer 3 has a thickness of 20 - 50 nm. Non-magnetic layer 4 has a thickness of 2 -50 nm. Recording layer 5 has a thickness of 30 - 100 nm. Protective film 6 has a thickness of 40 - 80 nm. SiN forming underlying layer 2, GdFeCo forming reproducing layer 3, SiN forming non-magnetic layer 4, TbFeCo forming recording layer 5, and SiN forming protective film 6 are formed by an RF magnetron sputtering method, a DC sputtering method or the like.

Referring to Fig. 2, reproducing layer 3 of magneto-optical recording medium 10 is a perpendicular magnetization film which is rare-earth-metal-rich at room temperature (that is, sub-lattice magnetization of rare earth metal is dominant; the same in the followings), and the magnetization thereof is initialized in a certain direction in advance when a signal is reproduced from magneto-optical recording medium 10. Note that this initialization needs to be done only once, and when a signal is repeatedly reproduced, the initialization is not required at each reproduction. Recording layer 5 is a perpendicular magnetization film having magnetization modulated by a record signal. It is noted that sub-lattice magnetization of the rare earth metal may also be referred to as "magnetization by rare earth metal".

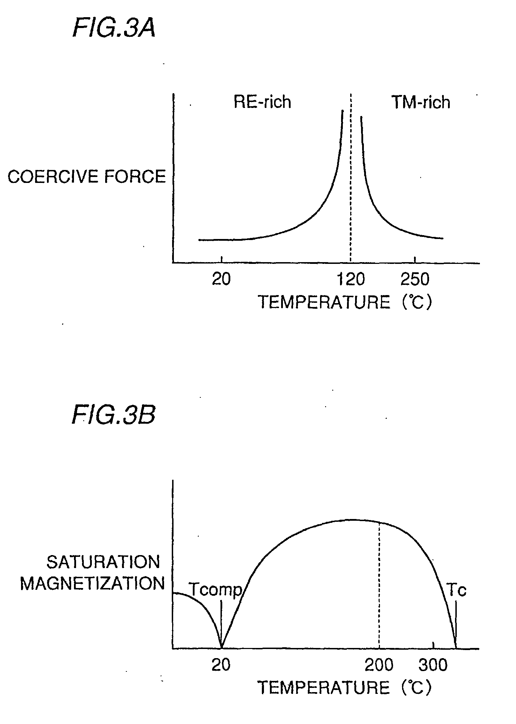

Referring to Fig. 3A, the magnetic characteristic of reproducing layer 3 of magneto-optical recording medium 10 will be described. Fig. 3A shows a temperature dependency of a coercive force of reproducing layer 3. The ordinate shows a coercive force and the abscissa shows a temperature. Reproducing layer 3 is a magnetic film which is rare-earth-metal-rich in the temperature range of 20 °C - 120 °C, and the coercive force thereof rapidly increases as the temperature approaches 120 °C. Then, when the temperature exceeds 120 °C, reproducing layer 3 becomes a transition-metal-rich magnetic film (that is, the sub-lattice magnetization of transition metal is dominant; the same in the followings), and the coercive force thereof rapidly decreases as the temperature rises. The temperature of 120 °C at which the rare-earth-metal-rich magnetic film changes to the transition-metal-rich magnetic film is referred to as a compensation temperature. It is noted that the sub-lattice magnetization of the transition metal is also referred to as "magnetization by transition metal".

In the present invention, reproducing layer 3 is not limited to the one formed of GdFeCo having a compensation temperature of 120 °C, and it may be formed of GdFeCo having a compensation temperature in the range of 100 to 160 °C. The composition of GdFeCo having a compensation temperature in the range of 100 to 160 °C is Gdₓ(FeCo)₁₀₀₋ₓ(x:23-30 at.%).

Referring to Fig. 3B, the magnetic characteristic of recording layer 5 of magneto-optical recording medium 10 will be described. Fig. 3B shows a temperature dependency of saturation magnetization of recording layer 5. The saturation magnetization of recording layer 5 drops with a temperature increase and becomes zero once in the vicinity of a temperature of 20 °C. This temperature of 20 °C is called a compensation temperature (Tcomp). Thereafter, the saturation magnetization of recording layer 5 increases with a temperature increase and is maximized at a temperature of about 200 °C. As the temperature further rises, the saturation magnetization of recording layer 5 is then reduced and reaches Curie point Tc at about 330 °C to be zero again. A large saturation magnetization of recording layer 5 means that a leakage magnetic field extending from recording layer 5 to reproducing layer 3 through non-magnetic layer 4 is large. In the present invention, recording layer 5 may be formed of TbFeCo having the compensation temperature in the range of -30 to 80 °C. The composition of TbFeCo having a compensation temperature in the range of -30 to 80 °C is Tbₓ(FeCo)₁₀₀₋ₓ (x:23-30 at.%). Alternatively, recording layer 5 may be formed of TbFe having a compensation temperature in the range of -30 to 80 °C.

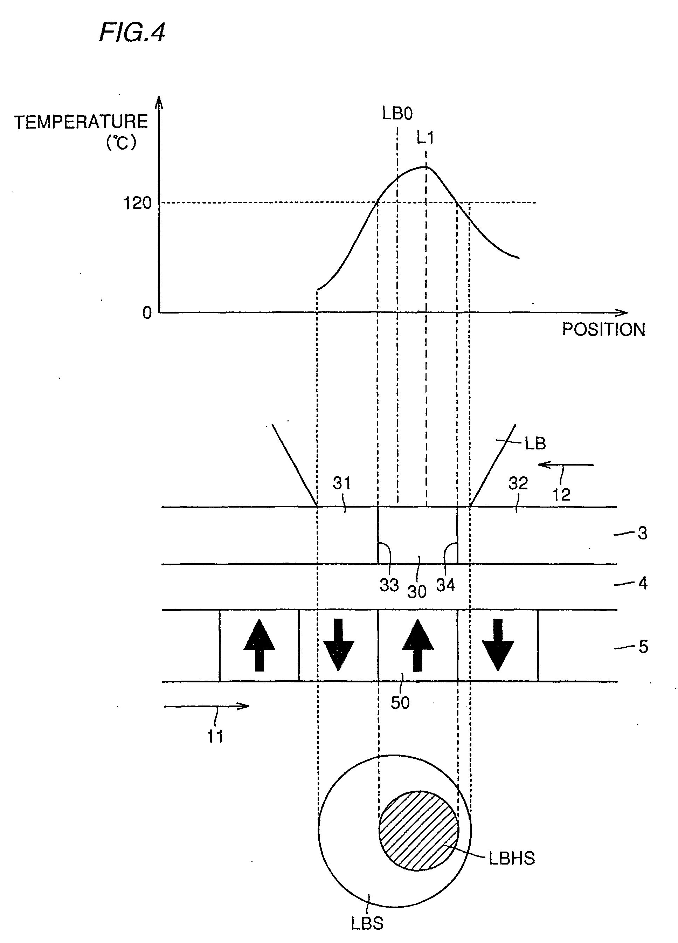

Referring to Fig. 4, when magneto-optical recording medium 10 rotating in the direction of arrow 11 at a prescribed speed of rotation is irradiated with laser beam LB from the side of reproducing layer 3, a temperature of reproducing layer 3 reaches the highest temperature at the position L1 ahead of an optical axis LB0 of laser beam LB. The temperature distribution of reproducing layer 3 is steep behind the position L1 with respect to the direction in which laser beam LB moves, and the temperature distribution of reproducing layer 3 is broad behind the position L1 with respect to the direction in which laser beam LB moves.

When magneto-optical recording medium 10 is irradiated with laser beam LB, a laser spot LBS is formed on magneto-optical recording medium 10 and a high temperature area LBHS is formed behind optical axis LB0 with respect to the direction in which the laser beam LB moves. The temperature of this high temperature area LBHS is raised to 120 °C or above, and area 30 of reproducing layer 30 that corresponds to this high temperature area LBHS is transition-metal-rich. The area other than high temperature area LBHS of laser spot LBS is not more than 120 °C, and areas 31, 32 of reproducing layer 3 that corresponds to this area are rare-earth-metal-rich.

As described in Fig. 3A, the coercive force is large in the vicinity of boundaries 33, 34 between transition-metal-rich area 30 and rare-earth-metal-rich areas 31, 32, and the coercive force becomes smaller as the distance from boundaries 33, 34 increases intransition-metal-rich area 30. Furthermore, the area of magnetic domain 50 of recording layer 5 that corresponds to the transition-metal-rich area 30 has a higher temperature and a larger saturation magnetization (see Fig. 3B). As a result, a leakage magnetic field extends from magnetic domain 50 through non-magnetic layer 4 to transition-metal-rich area 30 of reproducing layer 3, so that magnetic domain 50 is more easily transferred to the transition-metal-rich area 30 by magnetostatic coupling.

Furthermore, also in the rare-earth-metal-rich areas 31, 32, the coercive force becomes smaller as the distance from boundaries 33, 34 increases. Thus, when magneto-optical recording medium 10 is irradiated with laser beam LB, an area to which a magnetic domain is more easily transferred from recording layer 5 is formed in area 30 of reproducing layer 3 that corresponds to high temperature area LBHS within laser spot LBS.

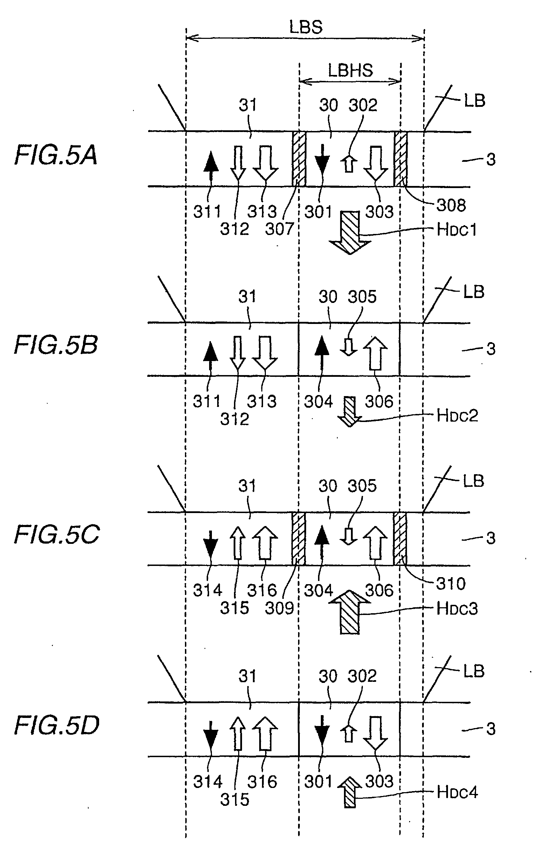

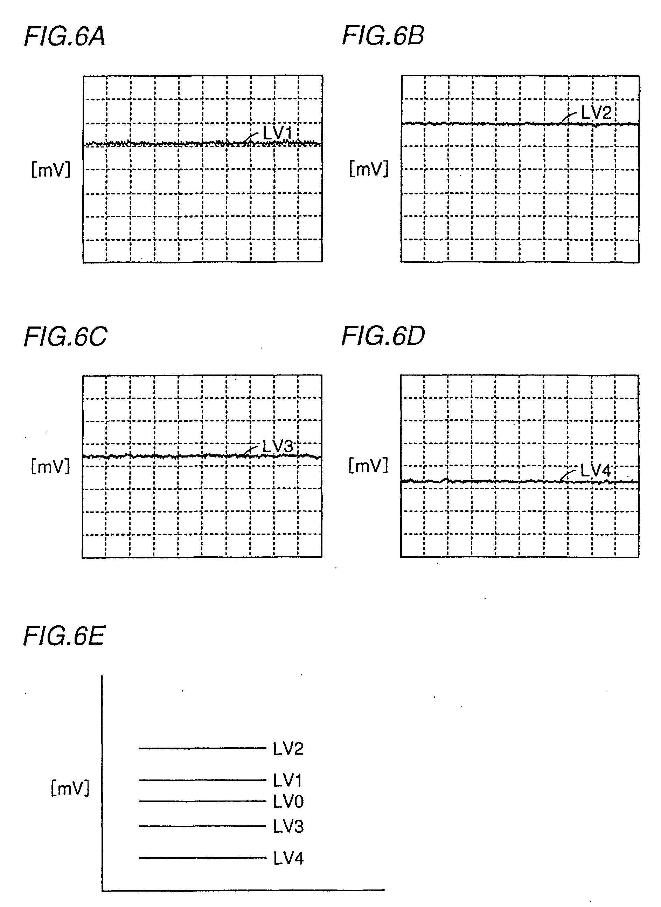

Referring to Figs. 5A to 5D and Figs. 6A to 6E, description will be given on the signal levels detected from reproducing layer 3 of magneto-optical recording medium 10 when magneto-optical recording medium 10 is irradiated with laser beam LB and a DC magnetic field H_{DC} is applied.

Referring to Fig. 5A, if magneto-optical recording medium 10 is irradiated with laser beam LB and a DC magnetic field H_{DC}1 is applied, magnetization by transition metal 311 and magnetization by rare earth metal 312 exist in area 31 of reproducing layer 3 that corresponds to the area other than high temperature area LBHS within laser spot LBS. Area 31 is a rare-earth-metal-rich area as it has a temperature distribution of 120 °C or below, and magnetization by rare earth metal 312 is larger than magnetization by transition metal 311. Furthermore, magnetization by rare earth metal 312 is in the direction opposite to magnetization by transition metal 311. As a result, total magnetization 313 having the same direction as magnetization by rare earth metal 311 exists in area 31. This total magnetization 313 corresponds to the magnetization of reproducing layer 3 initialized when a signal is reproduced from magneto-optical recording medium 10. It is noted that the direction of DC magnetic field H_{DC}1 is the same with that of total magnetization 313 (that is, the initialized magnetization) in area 31.

On the other hand, as the temperature rises to 120 °C or higher, area 30 of reproducing layer 3 that corresponds to high temperature area LBHS within laser spot LBS changes from the rare-earth-metal-rich area to the transition-metal-rich area and the magnetization by transition metal becomes larger than the magnetization by rare earth metal. In addition, with a temperature rise, the coercive force (in this case, the coercive force of the magnetization by transition metal) becomes smaller (see Fig. 3A), and the magnetization by transition metal is inverted by DC magnetic field H_{DC}1 in area 30. As a result, magnetization by transition metal 301 in the same direction as DC magnetic field H_{DC}1, magnetization by rare earth metal 302 and total magnetization 303 exist in area 30. Magnetization by rare earth metal 302 is in the direction opposite to magnetization by transition metal 301, and total magnetization 303 is in the same direction as magnetization by transition metal 301. Then, when DC magnetic field H_{DC}1 having intensity at which the magnetization in the transition-metal-rich area is inverted is applied, domain walls 307, 308 are formed at both ends of area 30 of the boundary between a high temperature area at 120 °C or higher and a low temperature area at 120 °C or lower. Here, magnetization by transition metal 301 in area 30 is in the direction opposite to magnetization by transition metal 311 in area 31, and the signal detected by laser beam LB has a signal level LV1 shown in Fig. 6A.

Referring to Fig. 5B, if a DC magnetic field H_{DC}2 having intensity at which the magnetization by transition metal in area 30 is not inverted is applied to magneto-optical recording medium 10, magnetization by transition metal 304, magnetization by rare earth metal 305 and total magnetization 306 exist in area 30. Magnetization by transition metal 304 is in the direction opposite to DC magnetic field H_{DC}2 and is larger than magnetization by rare earth metal 305. As a result, total magnetization 306 follows the direction opposite to DC magnetic field H_{DC}2. Here, since magnetization by transition metal 304 in area 30 and magnetization by transition metal 311 in area 31 follow the same direction, the signal level detected by laser beam LB is higher than that of Fig. 5A, as a signal level LV2 shown in Fig. 6B. It is noted that the state shown in Fig. 5B is energetically stable in that a domain wall exists on neither end of area 30. Furthermore, if the minimum intensity of the DC magnetic field required to invert the magnetization by transition metal in area 30 represents H_{DCMIN1}, H_{DC}1>H_{DCMIN1}>H_{DC}2 holds.

Referring to Fig. 5C, if the initialized magnetization of reproducing layer 3 is set to the direction opposite to those in Figs. 5A and 5B, magnetization by transition metal 314, magnetization by rare earth metal 315 and total magnetization 316 exist in area 31 having a temperature distribution lower than the compensation temperature (120 °C). Then, when a DC magnetic field H_{DC}3 in the same direction as the initialized magnetization is applied to magneto-optical recording medium 10, magnetization by transition metal 304, magnetization by rare earth metal 305 and total magnetization 306 exist in area 30 having a temperature distribution higher than the compensation temperature. Since the coercive force is small in area 30 (see Fig. 3A), the magnetization by transition metal is inverted by DC magnetic field H_{DC}3. As a result, magnetization by transition metal 304 in area 30 comes to have the direction opposite to magnetization by transition metal 314 in area 31. Therefore, domain walls 309, 310 exist at the both ends of area 30. Here, the signal detected by laser beam LB has a signal level LV3 shown in Fig. 6C.

Referring to Fig. 5D, if a DC magnetic field H_{DC}4 having intensity at which the magnetization by transition metal in area 30 is not inverted is applied to magneto-optical recording medium 10, magnetization by transition metal 301, magnetization by rare earth metal 302 and total magnetization 303 exist in area 30. Magnetization by transition metal 301 is in the direction opposite to DC magnetic field H_{DC}4 and is larger than magnetization by rare earth metal 302. As a result, total magnetization 303 follows the direction opposite to DC magnetic field H_{DC}4. Here, since magnetization by transition metal 301 in area 30 and magnetization by transition metal 314 in area 31 follow the same direction, the signal level detected by laser beam LB is lower than that shown in Fig. 5C (higher than that shown in Fig. 5C as the absolute value of the signal level), as a signal level LV4 shown in Fig. 6D. It is noted that the state shown in Fig. 5D is energetically stable in that a domain wall exists at neither end of area 30. Furthermore, if the minimum DC magnetic field intensity required to invert the magnetization in the transition-metal-rich area in area 30 represents H_{DCMIN2}, H_{DC}3>H_{DCMIN2}>H_{DC}4 holds.

Thus; the signal detected by laser beam LB has four levels by changing the intensity and direction of the DC magnetic field which is applied to magneto-optical recording medium 10. In other words, as shown in Fig. 6E, there are signal level LV1, signal level LV2, signal level LV3, and signal level LV4. It is noted that level LV0 is a reference level. Now, in the present invention, these four signal levels are utilized to reproduce a signal from magneto-optical recording medium 10 by magnetic domain enlargement.

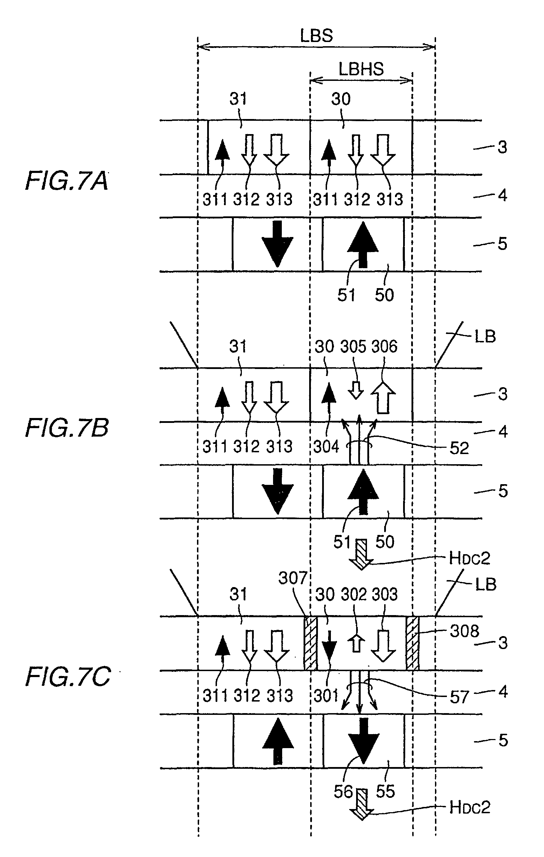

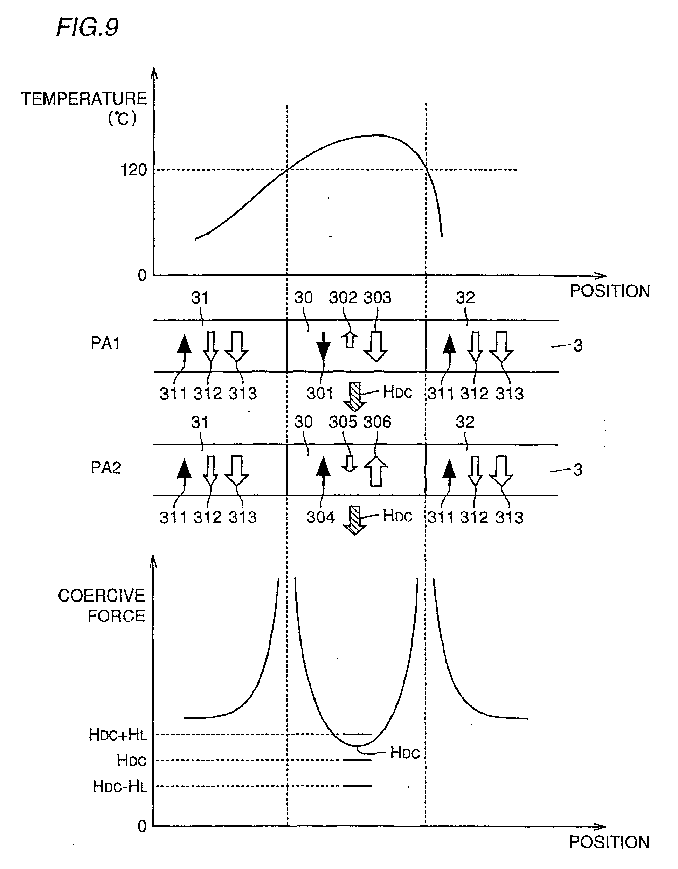

Referring to Figs. 7A to 7C, Pigs. 8A to 8C and Fig. 9, a principle of reproducing a signal in accordance with the present invention will be described. Referring to Fig. 7A, before reproduction of a signal from magneto-optical recording medium 10 is started, magnetization in reproducing layer 3 of magneto-optical recording medium 10 is initialized in a certain direction. Accordingly, areas 30, 31 in reproducing layer 3 have magnetization by transition metal 311, magnetization by rare earth metal 312 and total magnetization 313. Here, since magnetic domain 50 in recording layer 5 has magnetization 51 and saturation magnetization is almost zero, leakage magnetic field is hardly extended into reproducing layer 3.

Referring to Fig. 7B, when magneto-optical recording medium 10 is irradiated with laser beam LB from the side of reproducing layer 3 and DC magnetic field H_{DC}2 is applied to magneto-optical recording medium 10, area 30 of reproducing layer 3 that corresponds to high temperature area LBHS within laser spot LBS is heated to the compensation temperature or higher and changes from the rare-earth-metal-rich area to the transition-metal-rich area. In other words, the magnetization by transition metal becomes larger than the magnetization by rare earth metal. It is noted that the direction of DC magnetic field H_{DC}2 is the same with the direction of the initialized magnetization. Then, the leakage magnetic field from magnetic domain 50 of recording layer 5 that exists in the area corresponding to area 30 becomes larger with a temperature increase (see Fig. 3B) and magnetic domain 50 extends leakage magnetic field 52 into area 30 of reproducing layer 3. Leakage magnetic field 52, however, has the direction opposite to DC magnetic field H_{DC}2, and therefore a magnetic field of intensity obtained by subtracting the intensity of leakage magnetic field 52 from the intensity of DC magnetic field H_{DC}2 extends to area 30. As a result, it follows that the magnetization by transition metal in area 30 is not inverted, and magnetization by transition metal 304, magnetization by rare earth metal 305 and total magnetization 306 exist in area 30. Here, since magnetization by transition metal 304 in area 30 is in the same direction as magnetization by transition metal 311 in area 31, a domain wall exists at neither end of area 30, and a magneto-optical signal detected by laser beam LB has signal level LV2 (see Figs. 5B, 6B and 6E). Then, magnetization by transition metal 304, 311 in areas 30, 31 of reproducing layer 3 is in the same direction as magnetization 51 of magnetic domain 50 of recording layer 5, resulting in that magnetic domain 50 of recording layer 5 is enlarged and transferred to reproducing layer 3.

Referring to Fig. 7C, when magnetic domain 55 is irradiated with laser beam LB shifted in position from magnetic domain 50, magnetic domain 55 extends leakage magnetic field 57 into area 30 of reproducing layer 3. Since leakage magnetic field 57 is in the same direction as DC magnetic field H_{DC}2, a magnetic field of intensity obtained by adding the intensity of leakage magnetic field 57 to DC magnetic field H_{DC}2 extends to area 30. Furthermore, the transition-metal-rich area in area 30 comes to have a smaller coercive force with a temperature increase (see Fig. 3A). As a result, the magnetic field of intensity obtained by adding the intensity of leakage magnetic field 57 to the intensity of DC magnetic field H_{DC}2 increases in intensity, and the magnetization in area 30 is inverted. Then, magnetization by transition metal 301, magnetization by rare earth metal 302 and total magnetization 303 are created in area 30. Here, since magnetization by transition metal 301 in area 30 is in the direction opposite to magnetization by transition metal 311 in area 31, domain walls 307, 308 exist at the both ends of area 30. As a result, a magneto-optical signal detected by laser beam LB has signal level LV1 (see Figs. 5A, 6A and 6E). Magnetization by transition metal 301 in area 30 of reproducing layer 3 is in the same direction as magnetization 56 of magnetic domain 55 of recording layer 5, resulting in that magnetic domain 55 of recording layer 5 is transferred to reproducing layer 3.

In this way, when DC magnetic field H_{DC}2 having intensity weaker than the intensity at which the magnetization in the transition-metal-rich area in the area exceeding the compensation temperature is inverted, in case a magnetic domain having magnetization in the direction opposite to DC magnetic field H_{DC}2 is reproduced, the magnetization in the transition-metal-rich area in the area exceeding the compensation temperature is not inverted and the magnetic domain in recording layer 5 is enlarged and transferred to the entire area of laser spot LBS, resulting in a higher level of a detected magneto-optical signal. On the other hand, in case a magnetic domain having magnetization in the same direction as DC magnetic field H_{DC}2 is reproduced, the magnetization in the transition-metal-rich area in the area exceeding the compensation temperature is inverted and the magnetic domain in recording layer 5 is transferred to high temperature area LBHS within laser spot LBS, resulting in a lower level of a detected magneto-optical signal. In other words, a signal is reproduced from magneto-optical recording medium 10 by utilizing the case where the magnetic domain in recording layer 5 is enlarged and transferred and the case where it is transferred without enlargement.

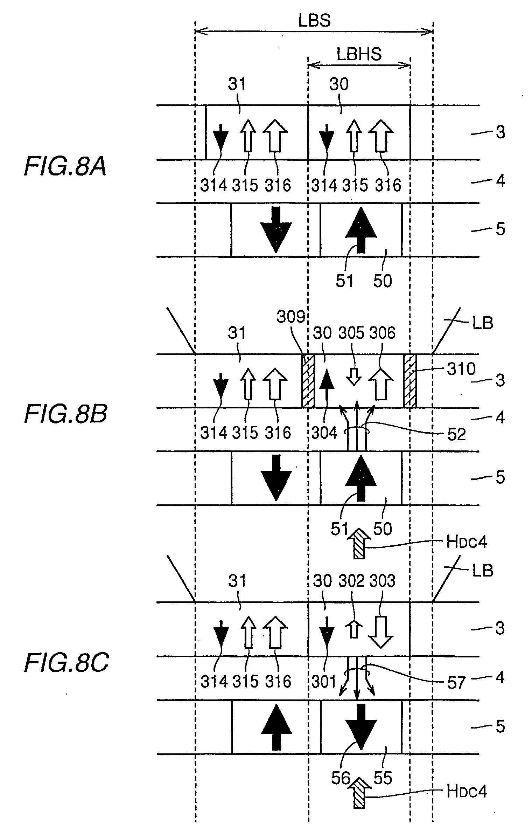

An example where the initialized magnetization of reproducing layer 3 is in the direction opposite to that shown in Fig. 7A will now be described. Referring to Fig. 8A, before reproduction of a signal from magneto-optical recording medium 10 is started, reproducing layer 3 of magneto-optical recording medium 10 is initialized in the direction opposite to that shown in Fig. 7A. Therefore, areas 30, 31 of reproducing layer 3 have magnetization by transition metal 314, magnetization by rare earth metal 315 and total magnetization 316. Here, since magnetic domain 50 of recording layer 5 has magnetization 51 and saturation magnetization is almost zero, leakage magnetic field is hardly extended into reproducing layer 3.

Referring to Fig. 8B, when magneto-optical recording medium 10 is irradiated with laser beam LB from the side of reproducing layer 3 and DC magnetic field H_{DC}4 is applied to magneto-optical recording medium 10, area 30 of reproducing layer 3 that corresponds to high temperature area LBHS within laser spot LBS is heated to the compensation temperature or higher and changes from the rare-earth-metal-rich area to the transition-metal-rich area. In other words, the magnetization by transition metal becomes larger than the magnetization by rare earth metal. It is noted that the direction of DC magnetic field H_{DC}4 is the same with the direction of the initialized magnetization. Then, a leakage magnetic field from magnetic domain 50 of recording layer 5 that exists in the area corresponding to area 30 becomes larger with a temperature increase (see Fig. 3B) and magnetic domain 50 extends leakage magnetic field 52 in the same direction as DC magnetic field H_{DC}4 into area 30 of reproducing layer 3. Furthermore, the transition-metal-rich area in area 30 comes to have a smaller coercive force as the temperature increases (see Fig. 3A). As a result, a magnetic field having intensity obtained by adding the intensity of leakage magnetic field 52 from magnetic domain 50 to the intensity of DC magnetic field H_{DC}4 extends to area 30, and the magnetic field extending to area 30 becomes stronger than the coercive force of the transition-metal-rich area in area 30, thereby inverting the magnetization by transition metal in area 30. Then, magnetization in transition-metal-rich area 304, magnetization by rare earth metal 305 and total magnetization 306 exist in area 30. Here, since magnetization by transition metal 304 in area 30 is in the direction opposite to magnetization by transition metal 314 in area 31, domain walls 309, 310 exist at both ends of area 30, and a magneto-optical signal detected by laser beam LB has signal level LV3 (see Figs. 5C, 6C and 6E). Then, magnetization by transition metal 304 in area 30 of reproducing layer 3 is in the same direction as magnetization 51 of magnetic domain 50 of recording layer 5, resulting in that magnetic domain 50 is transferred to reproducing layer 3.

Referring to Fig. 8C, when magnetic domain 55 is irradiated with laser beam LB shifted in position from magnetic domain 50, magnetic domain 55 extends leakage magnetic field 57 into area 30 of reproducing layer 3. Then, since leakage magnetic field 57 is in the direction opposite to DC magnetic field H_{DC}4, a magnetic field having intensity obtained by subtracting the intensity of leakage magnetic field 57 from the intensity of DC magnetic field H_{DC}4 extends to area 30. As a result, the magnetization in the transition-metal-rich area in area 30 is not inverted, and magnetization by transition metal 301, magnetization by rare earth metal 302 and total magnetization 303 are created in area 30. Here, since magnetization by transition metal 301 in area 30 is in the same direction as magnetization by transition metal 314 in area 31, a domain wall exists at neither end of area 30. As a result, a magneto-optical signal detected by laser beam LB has signal level LV4 (see Figs. 5D, 6D and 6E). Then, magnetization by transition metal 301, 314 in areas 30, 31 of reproducing layer 3 is in the same direction as magnetization 56 of magnetic domain 55 of recording layer 5, resulting in that magnetic domain 55 of recording layer 5 is enlarged and transferred to reproducing layer 3.

In this way, in the example where the initialized magnetization of reproducing layer 3 is opposite to that shown in Fig. 7A, when DC magnetic field H_{DC}4 having intensity weaker than the intensity at which the magnetization in the transition-metal-rich area in the area exceeding the compensation temperature is inverted is applied, in case a magnetic domain having magnetization in the same direction as DC magnetic field H_{DC}4 is reproduced, the magnetization in the transition-metal-rich area in the area exceeding the compensation temperature is inverted and the magnetic domain of recording layer 5 is transferred to high temperature area LBHS within laser spot LBS, resulting in a lower level of a detected magneto-optical signal. On the other hand, in case a magnetic domain having magnetization in the opposite direction to DC magnetic field H_{DC}4 is reproduced, the magnetization in the transition-metal-rich area in the area exceeding the compensation temperature is not inverted and the magnetic domain of recording layer 5 is transferred to the entire area within laser spot LBS, resulting in a higher level of a detected magneto-optical signal. In other words, a signal is reproduced from magneto-optical recording medium 10 by utilizing the case where the magnetic domain in recording layer 5 is enlarged and transferred and the case where it is transferred without enlargement.

As described with reference to Figs. 7A to 7C and Figs. 8A to 8C, when the direction of DC magnetic field H_{DC} externally applied to magneto-optical recording medium 10 is the same as the direction of leakage magnetic field H_{L} from the magnetic domain of recording layer 5, the magnetization in the transition-metal-rich area in the area exceeding the compensation temperature of reproducing layer 3 is inverted. When the direction of DC magnetic field H_{DC} is opposite to the direction of leakage magnetic field H_{L} from the magnetic domain of recording layer 5, the magnetization in the transition-metal-rich area in the area exceeding the compensation temperature of reproducing layer 3 is not inverted. In other words, as shown in Fig. 9, magneto-optical recording medium 10 is irradiated with a laser beam and area 30 of reproducing layer 3 exceeds the compensation temperature (120 °C). Furthermore, with a temperature increase, leakage magnetic field H_{L} from the magnetic domain of recording layer 5 that corresponds to area 30 of reproducing layer 3 increases in intensity. When the direction of DC magnetic field H_{DC} is the same as the direction of leakage magnetic field H_{L}, magnetic field H_{DC}+H_{L} is stronger than coercive force Hc of the magnetization in the transition-metal-rich area in area 30 of reproducing layer 3. Therefore the magnetization in the transition-metal-rich area in area 30 is inverted by magnetic field H_{DC}+H_{L}. Namely, the magnetization distribution in reproducing layer 3 is as a pattern PA1. On the other hands, when the direction of DC magnetic field H_{DC} is opposite to the direction of leakage magnetic field H_{L}, magnetic field H_{DC}-H_{L} is weaker than coercive force Hc in the transition-metal-rich area in area 30 of reproducing layer 3. Therefore, the magnetization in the transition-metal-rich area in area 30 is not inverted by magnetic field H_{DC}-H_{L}. Namely, the magnetization distribution in reproducing layer 3 is as a pattern PA2. Accordingly, when magnetic field H_{DC}+H_{L} extends to area 30 of reproducing layer 3, the level of the magneto-optical signal detected by laser beam LB is lower, and when magnetic field H_{DC}-H_{L} extends to area 30 of reproducing layer 30, the level of the magneto-optical signal detected by laser beam LB is higher.

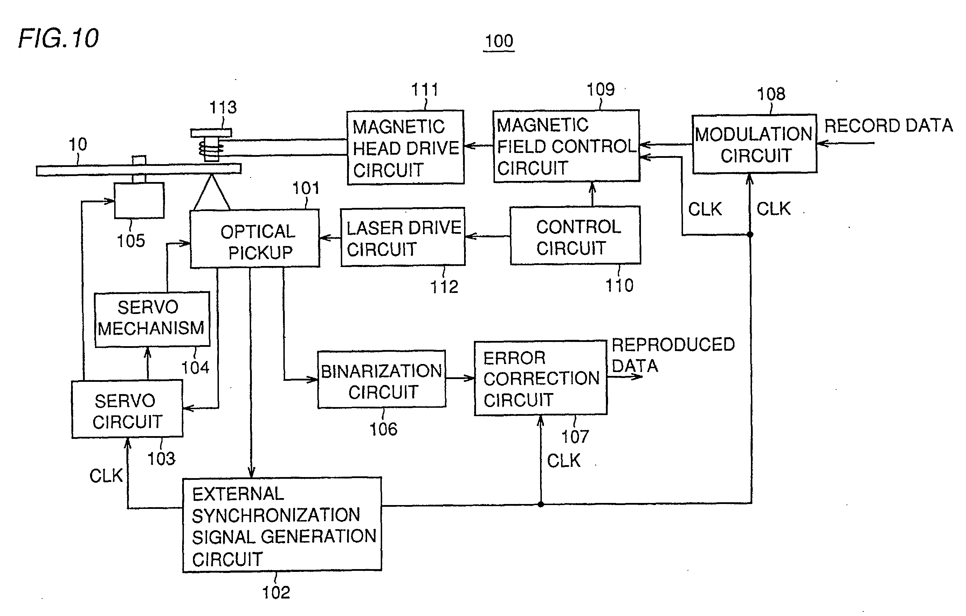

Referring to Fig. 10, a magneto-optical disk apparatus 100 in accordance with the present invention includes an optical pickup 101, an external synchronization signal generation circuit 102, a servo circuit 103, a servo mechanism 104, a spindle motor 105, a binarization circuit 106, an error correction circuit 107, a modulation circuit 108, a magnetic field control circuit 109, a control circuit 110, a magnetic head drive circuit 111, a laser drive circuit 112, and a magnetic head 113.

Optical pickup 101 irradiates magneto-optical recording medium 10 with a laser beam having intensity at which a part of reproducing layer 3 of magneto-optical recording medium 10 is heated to a temperature over the compensation temperature, and detects reflected light therefrom. External synchronization signal generation circuit 102 generates an external synchronization signal CLK based on an optical signal detected by optical pickup 102 according to the shape formed at regular intervals in magneto-optical recording medium 10, and outputs the generated external synchronization signal CLK to servo circuit 103, error correction circuit 107, modulation circuit 108, and magnetic field control circuit 109. Here, magneto-optical recording medium 10 has a track structure with lands and grooves alternately arranged in a radial direction. When optical pickup 101 travels the lands or the grooves, it outputs a signal detected by a radial push pull method to external synchronization signal generation circuit 102 as an optical signal. The external synchronization signal generation circuit 102 then compares the input optical signal at a prescribed level to generate a signal indicative of a position of a particular shape formed on magneto-optical recording medium 10, and generates external synchronization signal CLK such that a certain number of periodic signals exist between two adjacent components of that generated signal.

Servo circuit 103 receives a tracking error signal and a focus error signal detected by optical pickup 101 and receives external synchronization signal CLK from external synchronization signal generation circuit 102. Servo circuit 103 then controls servo mechanism 104 based on the tracking error signal and the focus error signal such that a tracking servo and a focus servo of an objective lens included in optical pickup 101 are turned on. In addition, servo circuit 103 rotates spindle motor 105 at a prescribed speed of rotation in synchronization with external synchronization signal CLK.

Servo mechanism 104 turns on the tracking servo and the focus servo of the objective lens of optical pickup 101 based on the control from servo circuit 103. Spindle motor 105 rotates magneto-optical recording medium 10 at a prescribed speed of rotation.

Binarization circuit 106 binarizes a magneto-optical signal reproduced by optical pickup 101 from magneto-optical recording medium 10 by the aforementioned method and outputs the reproduced signal to error correction circuit 107. Error correction circuit 107 corrects the reproduced signal from binarization circuit 106 for any error in synchronization with external synchronization signal CLK from external synchronization signal generation circuit 102, and outputs the signal to the outside as reproduced data.

Modulation circuit 108 modulates record data to a prescribed system in synchronization with external synchronization signal CLK from external synchronization signal generation circuit 102. Magnetic field control circuit 109 is controlled by control circuit 110 and generates a recording magnetic field drive signal for driving magnetic head 113 to produce a magnetic field modulated by a record signal input from modulation circuit 108 in synchronization with external synchronization signal CLK from external synchronization signal generation circuit 102, when a signal is recorded in magneto-optical recording medium 10. Furthermore, magnetic field control circuit 109 generates a reproducing magnetic field drive signal for driving magnetic head 113 to produce the aforementioned DC magnetic field H_{DC}2 or H_{DC}4 when a signal is reproduced from magneto-optical recording medium 10. Magnetic field control circuit 109 then outputs the recording magnetic field drive signal and the reproducing magnetic field drive signal to magnetic head drive circuit 111.

Control circuit 110 controls each unit of magneto-optical disk apparatus 100 as well as controls laser drive circuit 112 such that it produces a laser beam of a prescribed intensity when a signal is recorded in magneto-optical recording medium 10. In addition, control circuit 110 controls laser drive circuit 112 such that it produces a laser beam having intensity at which a part of reproducing layer 3 of magneto-optical recording medium 10 is heated to the compensation temperature or higher, when a signal is reproduced from magneto-optical recording medium 10.

Magnetic head drive circuit 111 drives magnetic head 113 based on the recording magnetic field drive signal or the reproducing magnetic field drive signal from magnetic field control circuit 109. Laser drive circuit 112 drives a semiconductor laser (not shown) included in optical pickup 101 to produce a laser beam of a prescribed intensity based on the control from control circuit 110. Magnetic head 113 is driven by magnetic head drive circuit 111, applies a magnetic field modulated by the record signal to magneto-optical recording medium 10 when a signal is recorded in magneto-optical recording medium 10, and applies DC magnetic field H_{DC}2 or H_{DC}4 to magneto-optical recording medium 10 when a signal is reproduced from magneto-optical recording medium 10. It is noted that DC magnetic fields H_{DC}2 and H_{DC}4 have the directions opposite to each other but have the same intensity. In the present invention, the intensity of DC magnetic field H_{DC}2 or H_{DC}4 ranges, for example, from 2 kA/m to 24 kA/m. Optical pickup 101 irradiates magneto-optical recording medium 10 with a pulse laser beam having intensity of 10-14 mW when a signal is recorded in magneto-optical recording medium 10, and irradiates magneto-optical recording medium 10 with a laser beam having intensity of 2.8 mW when a signal is reproduced from magneto-optical recording medium 10. Thus, a part of reproducing layer 3 of magneto-optical recording medium 10 is heated to a temperature over the compensation temperature (120 °C) when a signal is reproduced.

An operation to record a signal into magneto-optical recording medium 10 in magneto-optical disk apparatus 100 will be described. As magneto-optical recording medium 10 is attached to magneto-optical disk apparatus 100, control circuit 110 controls servo circuit 103 such that magneto-optical recording medium 10 is rotated at a prescribed speed of rotation, and controls laser drive circuit 112 such that a laser beam of a prescribed intensity is produced. Servo circuit 103 rotates spindle motor 105 at a prescribed speed of rotation under the control of control circuit 110, and spindle motor 105 rotates magneto-optical recording medium 10 at a prescribed speed of rotation. Furthermore, laser drive circuit 112 drives a semiconductor laser (not shown) included in optical pickup 101 to produce a laser beam of a prescribed intensity, and optical pickup 101 irradiates magneto-optical recording medium 10 with a laser beam of a prescribed intensity. Optical pickup 101 then detects a tracking error signal, a focus error signal and the above-noted optical signal from magneto-optical recording medium 10 and outputs the detected tracking error signal and focus error signal to servo circuit 103 and the detected optical signal to external synchronization signal generation circuit 102.

Servo circuit 103 controls servo mechanism 104 such that a tracking servo and a focus servo of an objective lens (not shown) included in optical pickup 101 are turned on based on the tracking error signal and the focus error signal. Servo mechanism 104 turns on the tracking servo and the focus servo of the objective lens based on the control from servo circuit 103. Therefore, the laser beam radiates from optical pickup 101 to scan the land or the groove of magneto-optical recording medium 10.

On the other hand, external synchronization signal generation circuit 102 generates external synchronization signal CLK by the above-noted way and outputs the generated external synchronization signal CLK to servo circuit 103, error correction circuit 107, modulation circuit 108 and magnetic field control circuit 109. Servo circuit 103 then rotates spindle motor 105 in synchronization with external synchronization signal CLK, so that magneto-optical recording medium 10 is rotated in synchronization with external synchronization signal CLK.

Thereafter, modulation circuit 108 modulates record data into a prescribed system in synchronization with external synchronization signal CLK from external synchronization signal generation circuit 102 and outputs the modulated record signal to magnetic field control circuit 109. Magnetic field control circuit 109 generates a recording magnetic field drive signal for driving magnetic head 113 to produce a magnetic field modulated by the record signal from modulation circuit 108, in synchronization with external synchronization signal CLK from external synchronization signal generation circuit 102, and outputs the generated recording magnetic field drive signal to magnetic head drive circuit 111. Magnetic head drive circuit 111 drives magnetic head 113 based on the recording magnetic field drive signal, and magnetic head 113 applies the magnetic field modulated by the record signal to magneto-optical recording medium 10. Therefore, a signal is recorded in magneto-optical recording medium 10.

An operation of reproducing a signal from magneto-optical recording medium 10 in magneto-optical disk apparatus 100 will now be described. The operation is the same as the signal recording operation until magneto-optical recording medium 10 is attached to magneto-optical disk apparatus 100, the tracking servo and the focus servo of the objective lens (not shown) included in optical pickup 101 are turned on, and magneto-optical recording medium 10 is rotated in synchronization with external synchronization signal CLK. It is noted that optical pickup 101 irradiates magneto-optical recording medium 10 with a laser beam of 2.8 mW, which is weaker than the intensity in the recording operation.

Thereafter, control circuit 110 controls magnetic field control circuit 109 such that it generates the above-noted reproducing magnetic field drive signal, and magnetic field control circuit 109 generates and outputs the reproducing magnetic field drive signal to magnetic head drive circuit 111. Magnetic head drive circuit 111 drives magnetic head 113 based on the reproducing magnetic field drive signal, and magnetic head 113 applies DC magnetic field H_{DC}2 or H_{DC}4 to magneto-optical recording medium 10. Optical pickup 101 then detects a magneto-optical signal varying in intensity between two levels from magneto-optical recording medium 10 by the above-noted method, and outputs the detected magneto-optical signal to binarization circuit 106.

Binarization circuit 106 binarizes the magneto-optical signal and outputs a reproduced signal to error correction circuit 107. Error correction circuit 107 corrects any error of the reproduced signal and outputs reproduced data. Therefore, a signal is reproduced from magneto-optical recording medium 10 by the magnetic domain enlargement system.

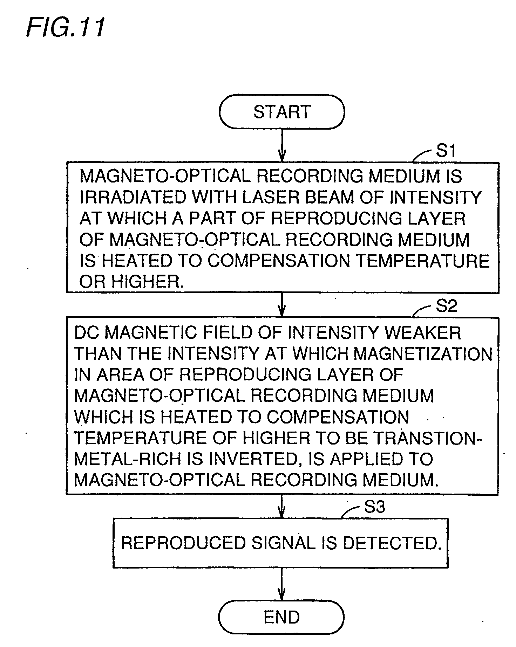

Referring to Fig. 11, a method of reproducing a signal in accordance with the present invention will be described. As a reproducing operation of a signal from magneto-optical recording medium 10 is started, magneto-optical recording medium 10 is irradiated with a laser beam having intensity at which a part of reproducing layer 3 of magneto-optical recording medium 10 is heated to the compensation temperature (120 °C) or higher (Step S1). Then, a DC magnetic field of intensity weaker than the intensity at which the magnetization in that area of reproducing layer 3 of magneto-optical recording medium 10 which is heated to the compensation temperature or higher to be transition-metal-rich is inverted, is applied to magneto-optical recording medium 10 (Step S2). A magneto-optical signal varying in intensity between two levels is detected by optical pickup 101, the detected magneto-optical signal is binarized and corrected for any error, and a reproduced signal is detected (Step S3). Then, the reproducing operation ends.

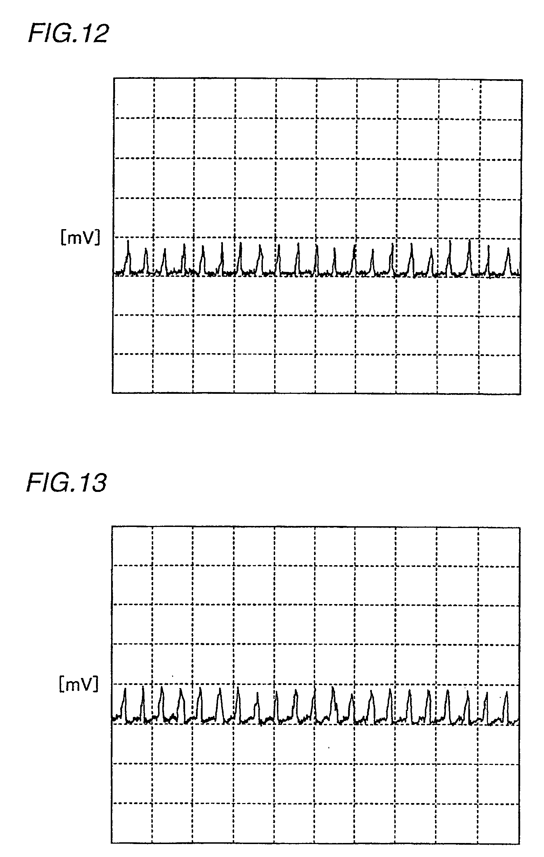

Referring to Figs. 12 and 13, a waveform of a magneto-optical signal when a magnetic domain having a prescribed domain length recorded in recording layer 5 of magneto-optical recording medium 10 is reproduced will be described. Fig. 12 represents a reproduction waveform when a record signal by which a magnetic domain having a domain length of 0.125 µm is sequentially recorded at intervals of 1.75 µm is reproduced by the aforementioned magnetic domain enlargement and reproduction system. Fig. 13 is a reproduction waveform when a record signal by which a magnetic domain having a domain length of 0.5 µm is sequentially recorded at intervals of 1.375 µm is reproduced by the aforementioned magnetic domain enlargement and reproduction system. As is clear from Figs. 12 and 13, both in a shorter domain length of 0.125 µm and in a relatively longer domain length of 0.5 µm, a reproduced signal with large intensity is sequentially detected, and it is appreciated that the reproduction method in accordance with the present invention is suitable for the magnetic domain enlargement and reproduction system.

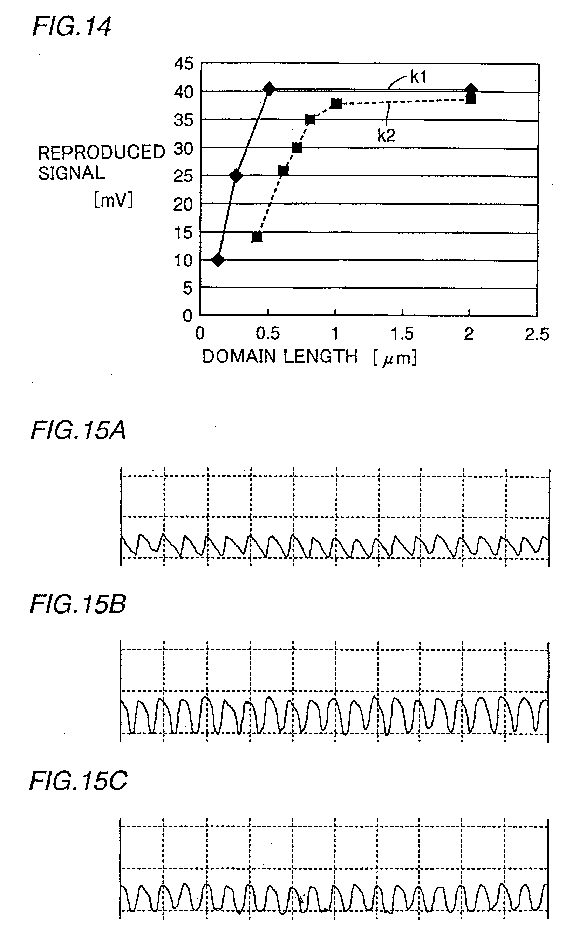

Fig. 14 shows the intensity of a reproduced signal when the domain length of the magnetic domain to be recorded in recording layer 5 is varied. Curve k1 shows the case where a signal is reproduced from magneto-optical recording medium 10 by the aforementioned method, and curve k2 shows the case where a signal is reproduced from a magneto-optical recording medium of exchange coupling type with recording and reproducing layers adjoined. As is clear from Fig. 14, in an area where the domain length is shorter than 1 µm, a reproduced signal from magneto-optical recording medium 10 has intensity larger than a reproduced signal from the magneto-optical recording medium of exchange coupling type. Therefore, the aforementioned method allows the magnetic domain in the recording layer to be enlarged and transferred to the reproducing layer at high resolution for reproduction, even when a signal is recorded in magneto-optical recording medium 10 at a high density with a short domain length of the magnetic domain.

Referring to Figs. 15A to 15C, waveforms of reproduced signals when GdFeCo having different compensation temperatures is used for reproducing layer 3 of magneto-optical recording medium 10, will be described. Fig. 15A shows the case where Gd₂₇(FeCo)₇₃ having a compensation temperature of 100 °C is used for reproducing layer 3, Fig. 15B shows the case where Gd₂₆(FeCo)₇₄ having a compensation temperature of 120 °C is used for reproducing layer 3, and Fig. 15C shows the case where Gd₂₄(FeCo)₇₆ having a compensation temperature of 160 °C is used for reproducing layer 3. It is noted that in Figs. 15A to 15C, the magnetic domain recorded in recording layer 5 of magneto-optical recording medium 10 has a domain length of 0.25 µm. From the results of Figs. 15A to 15C, the largest reproduced signal can be obtained when the compensation temperature is 120 °C. Even when GdFeCo having a compensation temperature of 100 °C or 160 °C is used, however, a reproduced signal at a practical level can be obtained. Therefore, in the present invention, a signal is recorded and/or reproducing in/from magneto-optical recording medium 10 using GdFeCo having a compensation temperature in the range of 100 to 160 °C as reproducing layer 3.

As described above, DC magnetic field H_{DC}2 or H_{DC}4 to be applied to magneto-optical recording medium 10 by itself cannot invert magnetization by transition metal in the area 30 heated over the compensation temperature in reproducing layer 3. The intensity of such DC magnetic field H_{DC}2 or H_{DC}4 initializes the magnetization in reproducing layer 3 of magneto-optical recording medium 10, and DC magnetic field H_{DC}2 or H_{DC}4 in the direction opposite to that initialized magnetization is applied to reproducing layer 3 with its intensity being varied. The intensity of the DC magnetic field when Kerr rotation angle of the detected laser beam is rotated 180 degrees is then detected. Since the intensity of the DC magnetic field when this Kerr rotation angle is rotated 180 degrees equals to the intensity which inverts the magnetization by transition metal, the intensity weaker than the detected intensity is determined as the intensity of DC magnetic field H_{DC}2 or H_{DC}4 to be applied to magneto-optical recording medium 10.

In accordance with the embodiment of the present invention, in the magneto-optical disk apparatus, the magneto-optical recording medium is irradiated with a laser beam of intensity at which a part of the reproducing layer of the magneto-optical recording medium is heated to the compensation temperature or higher. A DC magnetic field having intensity weaker than the intensity at which the magnetization in the transition-metal-rich area in the area heated to the compensation temperature or higher is applied to the magneto-optical recording medium. The magnetic domain of the recording layer is transferred to that area of the reproducing layer which corresponds to a portion of the laser spot when the direction of the DC magnetic field is consistent with the direction of the leakage magnetic field from the magnetic domain of the recording layer, and the magnetic domain in the recording layer is enlarged and transferred to that area in the reproducing layer which corresponds to the entire laser spot when the direction of the DC magnetic field is opposite to the direction of the leakage magnetic field from the magnetic domain in the recording layer. Therefore, a signal is correctly reproduced from the magneto-optical recording medium by the magnetic domain enlargement system by detecting two different levels with a laser beam.

The embodiment disclosed herein is taken not by way of limitation but by way of illustration. The spirit and scope of the present invention is shown not in the description of the embodiments described above but in the claims, and it is intended that all changes within and equivalent to the claims are included.

### Industrial Applicability

In accordance with the present invention, a signal can be reproduced sequentially from a magneto-optical recording medium according to a magnetic domain enlargement system by irradiating the magneto-optical recording medium with a laser beam of a prescribed intensity and applying a DC magnetic field of a prescribed intensity to the magneto-optical recording medium. Therefore, the present invention is applied to a magneto-optical disk apparatus and a method of reproducing a signal, in which a signal is reproduced from a magneto-optical recording medium by the magnetic domain enlargement system.

## Claims

1. A magneto-optical disk apparatus (100) reproducing a signal from a magneto-optical recording medium (10) including a reproducing layer (3) which is rare-earth-metal-rich at room temperature and becomes transition-metal-rich at least a compensation temperature, comprising:
an optical pickup (101) irradiating said magneto-optical recording medium (10) with a laser beam having such intensity that apart of said reproducing layer (3) is heated to at least said compensation temperature, and detecting reflected light therefrom;
a magnetic head (113) applying to said magneto-optical recording medium (10) a DC magnetic field having a second magnetic field intensity weaker than a first magnetic field intensity at which magnetization in a transition-metal-rich area of said reproducing layer (3) is inverted; and
a signal processing circuit (106, 107) processing a magneto-optical signal detected by said optical pickup (101) while said DC magnetic field is being applied to said magneto-optical recording medium (10), and outputting a reproduced signal.

2. The magneto-optical disk apparatus according to claim 1, wherein
said magnetic head (113) applies to said magneto-optical recording medium (10) a DC magnetic field in the same direction as either one of magnetization in one direction and opposite direction of a magnetic domain (50, 55) formed in a recording layer (5) of said magneto-optical recording medium (10).

3. The magneto-optical disk apparatus according to claim 2, wherein
said magnetic head (113) applies to said magneto-optical recording medium (10) a DC magnetic field having intensity H_{DC} that satisfies H_{DC}+H_{L}>Hc>H_{DC}-H_{L},
where H_{C} represents a coercive force in said transition-metal-rich area in a part (30) of said reproducing layer (3), H_{L} represents a leakage magnetic field extending from the magnetic domain (50, 55) in said recording layer (5) to the part (30) of said reproducing layer (3), and H_{DC} represents the intensity of said DC magnetic field.

4. The magneto-optical disk apparatus according to claim 3, wherein
said optical pickup (101) detects a magneto-optical signal at a first level when a magnetic domain (50, 55) having magnetization in the same direction as said DC magnetic field is transferred to said reproducing layer (3), and detects a magneto-optical signal at a second level different from said first level when a magnetic domain (50, 55) having magnetization in the direction opposite to said DC magnetic field is transferred to said reproducing layer (3).

5. The magneto-optical disk apparatus according to claim 1, wherein
said magnetic head (113) applies to said magneto-optical recording medium a DC magnetic field in the same direction as initialized magnetization of said reproducing layer (3).

6. The magneto-optical disk apparatus according to claim 5, wherein
said optical pickup (101) detects a magneto-optical signal at a first level when a magnetic domain having magnetization in the same direction as said initialized magnetization is transferred to said reproducing layer (3), and detects a magneto-optical signal at a second level higher than said first level when a magnetic domain (50, 55) having magnetization in the direction opposite to said initialized magnetization is transferred to said reproducing layer (3).

7. The magneto-optical disk apparatus according to claim 5, wherein
said optical pickup (101) detects a magneto-optical signal at a first level when a magnetic domain (50, 55) having magnetization in the same direction as said initialized magnetization is transferred to said reproducing layer (3), and detects a magneto-optical signal at a second level lower than said first level when a magnetic domain (50, 55) having magnetization in the direction opposite to said initialized magnetization is transferred to said reproducing layer (3).

8. A method of reproducing a signal from a magneto-optical recording medium (10) including a reproducing layer (3) which is rare-earth-metal-rich at room temperature and becomes transition-metal-rich at least a compensation temperature, comprising:
a first step of irradiating said magneto-optical recording medium (10) with a laser beam of such intensity that a part (30) of said reproducing layer (3) is heated to at least said compensation temperature;
a second step of applying to said magneto-optical recording medium (10) a DC magnetic field having a second magnetic field intensity weaker than a first magnetic field intensity at which magnetization of a transition-metal-rich area of said reproducing layer (3) is inverted; and
a third step of processing a magneto-optical signal detected by applying said DC magnetic field to said magneto-optical recording medium (10), and outputting a reproduced signal.

9. The reproducing method according to claim 8, wherein
in said second step, a DC magnetic field in the same direction as either one of magnetization in one direction and opposite direction of a magnetic domain (50, 55) formed in a recording layer (5) of said magneto-optical recording medium (10) is applied to said magneto-optical recording medium (10).

10. The reproducing method according to claim 9, wherein
in said second step, a DC magnetic field having intensity H_{DC} which satisfies H_{DC}+H_{L}>Hc>H_{DC}-H_{L} is applied to said magneto-optical recording medium (10)
where Hc represents a coercive force in said transition-metal-rich area in a part (30) of said reproducing layer (3), H_{L} represents a leakage magnetic field extending from the magnetic domain in said recording layer (5) to the part (30) of said reproducing layer (3), and H_{DC} represents the intensity of said DC magnetic field.

11. The reproducing method according to claim 10, wherein
in said third step, a magneto-optical signal at a first level is detected when a magnetic domain (50, 55) having magnetization in the same direction as said DC magnetic field is transferred to said reproducing layer (3), and a magneto-optical signal at a second level different from said first level is detected when a magnetic domain (50, 55) having magnetization in the direction opposite to said DC magnetic field is transferred to said reproducing layer (3).

12. The reproducing method according to claim 8, wherein
in said second step, a DC magnetic field in the same direction as initialized magnetization of said reproducing layer (3) is applied to said magneto-optical recording medium (10).

13. The reproducing method according to claim 12, wherein
in said third step, a magneto-optical signal at a first level is detected when a magnetic domain (50, 55) having magnetization in the same direction as said initialized magnetization is transferred to said reproducing layer (3), and a magneto-optical signal at a second level higher than said first level is detected when a magnetic domain (50, 55) having magnetization in the direction opposite to said initialized magnetization is transferred to said reproducing layer (3).

14. The reproducing method according to claim 12, wherein
a magneto-optical signal at a first level is detected when a magnetic domain (50, 55) having magnetization in the same direction as said initialized magnetization is transferred to said reproducing layer (3), and a magneto-optical signal at a second level lower than said first level is detected when a magnetic domain (50, 55) having magnetization in the direction opposite to said initialized magnetization is transferred to said reproducing layer (3).
